(19) Europäisches Patentamt
European Patent Office
Office européen des brevets

(11) Publication number: **0 116 644 B1**

(12) **EUROPEAN PATENT SPECIFICATION published in accordance with Art. 158(3) EPC**

(45) Date of publication of patent specification: **05.06.91**

(51) Int. Cl.[5] **G01L 5/00**, G01N 29 04

(21) Application number: **82900997.6**

(22) Date of filing: **30.03.82**

(86) International application number:
**PCT/JP82/00087**

(87) International publication number:
**WO 83/03470 (13.10.83 83/24)**

# (54) METHOD OF MEASURING CONTACT STRESS OF CONTACTING SOLID SURFACES WITH ULTRASONIC WAVES.

(43) Date of publication of application:
**29.08.84 Bulletin 84/35**

(45) Publication of the grant of the patent:
**05.06.91 Bulletin 91/23**

(84) Designated Contracting States:
**DE FR GB**

(56) References cited:
**DE-C- 938 273**
**JP-A-49 348 79**
**JP-A-53 949 89**
**JP-Y- 4 214 634**
**US-A-41 321 17**
**JP-A-48 120 82**
**JP-A-53 143 292**
**JP-A-56 129 855**
**US-A-30 632 90**

**PATENTS ABSTRACTS OF JAPAN**, vol. 7, no. 93 (P-192)[1238], April 19, 1983, Tokyo, JP; & JP - A - 58 19 525 (HITACHI KENKI K.K.) 04-02-1983

(73) Proprietor: **HITACHI CONSTRUCTION MACHINERY CO., LTD.**
**2-10, Uchikanda-1-chome**
**Chiyoda-ku Tokyo 101(JP)**

(72) Inventor: **OGURA, Yukio**
**Arakawa-Hongo 1343-251, Amimachi,**
**Inashiki-Gun**
**Ibaraki, 300-11(JP)**
Inventor: **MIYAJIMA, Takeshi**
**1801, Oaza Sakayori Makabemachi**
**Makabe-gun Ibaraki 300-44(JP)**

(74) Representative: **Waxweiler, Jean et al**
**OFFICE DENNEMEYER S.à.r.l. P.O. Box 1502**
**L-1015 Luxembourg(LU)**

**EP 0 116 644 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical field of the invention

The present invention concerns a method of measuring the contact stress at contacting surfaces of abutting solid masses of either a same kind or different kinds by utilizing an ultrasonic wave.

The term "contacting surfaces of abutting solid masses" herein used means the contacting surfaces between parts or members constituting an apparatus such as machine or an architectural structure in various industrial fields. This term includes not only the contacting surfaces of abutting solid masses which are stationary, but also those contacting surfaces of abutting solid masses which are in the state of undergoing a displacement such as by sliding. Also, the word "solid mass" herein referred to points to a mass of a metal as well as a mass of a non-metal such as glass, ceramic, concrete, synthetic resin, rubber and wood, through which ultrasonic waves can be transmitted.

The types of contact stresses at the contacting surfaces of abutting solid masses referred to above which are the objectives of the technique of the present invention include: the contact stress at the fitting surfaces produced from interference fit due, for example, to shrink fitting, expansion fitting or press-fitting; the contact stress at the die-fastened surfaces on a press; the contact stress at the bolt-fastened surfaces; the contact stress at the meshing surfaces of toothed wheels; the contact stress at screwed surfaces; the contact stress between a spline or key and a part or member contacting it; the contact stress between a bearing and a shaft; the contact stress between a valve and a valve seat; the contact stress between a cylinder bore and a piston ring; and other contact stresses at the contacting surfaces between parts or members constituting various apparatuses. The present invention relates to the method of measuring these contact stresses.

### Background art

Among the field of techniques concerning the present invention, the interference fitting technique such as shrink fitting, expansion fitting and press-fitting, which represents a typical method of combining together solid masses of mainly cylindrical confiturations is widely utilized as a means of mechanically combining two parts together. In such instance, the acquisition of the knowledge of the contact stress at the contacting surfaces of abutting two parts to serve as a measure for determining the degree of interference fit is a matter indispensable for knowing the function as well as the mechanical strength of a machine or for knowing the degree of the true interference fit of combined portions of parts. Heretofore, however, there has not been established a method of directly and quantitatively measuring the contact stress at the contacting surfaces of combined parts.

For the reasons stated above, various means of measuring contact stresses are being studied. However, generally, there have been known only the method of indirectly measuring a contact stress by making use of photoelasticity, and also the method of directly-measuring the contact stress by utilizing a pressure-sensitive sheet. As such, according to this prior method which measures the contact stress by releasing the fastened state and then observing the condition of the pressure-sensitive sheet, it is not possible to avoid the lowering of the accuracy of measurement, and also it is not possible to perform quantitative measurement either. Not only that, the prior method cannot be utilized in making a measurement of contact stress at the contacting surfaces of interference fit such as shrink fit, expansion fit and press-fit surfaces. The prior methods stated above invariably are directed only to the measurement of the stationary contact stresses, and have the inconveniences and drawbacks that they are unable to perform measurement of the so-called dynamic contact stresses wherein the mutual contacting surfaces are displacing relative to each other.

In order to improve the problems of the prior techniques as stated above, and to perform a measurement while maintaining the state and the nature or property of the contacting surfaces which are to be measured, researches are being made to utilize ultrasonic waves (see Non-Destructive Inspection, vol. 25, 10th issue, pp. 669-675).

This latter known technique intends to measure only the intensity of the reflecting wave of an ultrasonic wave at the contacting surfaces of abutting two metal masses, to thereby measure the contact stress at such surfaces. More specifically, at the current level of the techniques of processing metal surfaces, it is not possible to manufacture a true planar surface or a true curved surface which is free of surface roughness or windings. Rather, usual contact surfaces are inevitably constructed with abutting two surfaces having surface roughness or windings, the state of such contact being microscopically enlarged and shown schematically in Fig. 1. It will be noted therein that the two contact surfaces are comprised of a true contact portion C wherein two metal masses are in direct contact with each other, and a contact portion N wherein the two metal masses are not in direct contact with each other but there is the intervention of air therebetween. When an ultrasonic wave is emitted toward the contacting surfaces, there is the tendency that the intensity of the reflecting wave

becomes smaller with an increase in the largeness of the area of the true contact surfaces. This known technique makes use of said tendency, and intends to make the measurement of contact stress based on this nature or trend.

As a concrete method of making a measurement attempted in said research, reference test pieces are used to preliminarily establish the reference relationship between contact stress and intensity of reflecting wave, and using this relationship as a correction curve, quantification of the measurement value is attempted. It has been reported, however, to the effect that "at the present stage, the accuracy of measurement cannot be said good enough to put the present method to practice".

The above-stated method of measuring the intensity of the reflecting wave of ultrasonic wave at the contacting surfaces to seek the contact stress of abutting two metal masses is theoretically possible. According to the research conducted by the present inventors, however, it has been found that this proposed prior technique bears various shortcomings from practical point of view. More particularly, Fig. 2 is an explanatory illustration showing the manner of measuring the intensity of the reflecting wave at the contacting surfaces. In Fig. 2, I and II represent carbon steel pieces, respectively, for machine structural use. These steel pieces are made of a material labeled S35C (JIS G 4051, but containing 0.32 - 0.38% of carbon). The metal piece I has a thickness $t_1$ =30mm, and the metal piece II has a thickness $t_2$ =20mm. An ultrasonic wave sensor 2 is applied onto a surface of the metal piece I, and an ultrasonic wave having a frequency of 5MHz is directed onto the contacting surfaces in a direction normal thereto from the sensor 2. While varying the contact stress $\sigma$ of the metal pieces I and II, the intensity h(dB) of the reflecting wave of the ultrasonic wave is measured by the sensor 2. The result of this measurement is shown by way of graph in Fig. 3. It should be understood that this measurement is conducted by using an ultrasonic flaw detector of pulse echo type, so that the result of measurement represents the value indicated in decibel on the Braun tube display screen (CRT) of the apparatus.

As will be noted from Fig. 3, the variation of the intensity of the reflecting wave due to the increase in the contact stress is very small, being about 0.2dB/kg/mm$^2$. Such level as this will constitute a big obstacle in making a correct quantitative evaluation of the contact stress relative to the intensity of the reflecting wave. Furthermore, as stated above, this method preliminarily establishes a reference relationship between the contact stress and the intensity of reflecting wave, and evaluation is made by comparison between this reference value and the intensity of the reflecting wave which is the result of measurement. It should be noted, however, that with respect to the surface of the reference test piece on which the ultrasonic wave sensor is placed and also to the surface of the objective requiring a measurement, there inevitably exist differences in the shape and roughness of the surfaces, and a difference in the manner of applying the ultrasonic wave thereonto. These differences directly affect the result of measurement, causing variance in the result of measurement, and thus making the quantitative evaluation all the more difficult.

Through DE-C-938 273 a method is known to measure contact stress in a contacting surface by directing ultrasonic waves onto said surface and detecting the ultrasonic waves reflected by and transmitted through said surface. So this this publication discloses the prior art described in the preamble of the independent claim.

JP-A-49-34879 discloses a method of flaw detection, especially in austenitic stainless steel using an oblique detection method which is a pulse reflection method and two detecting elements, a longitudinal wave being used as the refracted wave entering the object of austenitic stainless steel being inspected.

The present invention has, as its basic object, to provide a method of masuring the contact stress at the contact surfaces of abutting solid masses of a same kind or different kinds by utilizing an ultrasonic wave, which eliminates the abovesaid problems of the prior techniques and which is able to evaluate the correct value quantitatively and with a high accuracy without altering at all the state of contact at the surfaces for measurement and the nature or property of such state.

Another object of the present invention is to provide a method of measuring the contact stress of the contacting surfaces of abutting solid masses, which is capable of making a measurement during a very short period of time.

Still another object of the present invention is to provide a method of measuring the contact stress of the contacting surfaces of abutting solid masses, which is capable of making an accurate quantitative evaluation at all times without being affected by such factors as the shape and roughness of the surface of the objective mass on which an ultrasonic wave sensor is placed and even when there is a little difference from the precise position in, for example, the manner of directing the ultrasonic in, for example, the manner of directing the ultrasonic wave sensor toward the contact surfaces.

These objectives are achieved according to the invention in the known method of measuring a contact stress at contacting surfaces of a first solid mass (I) and a second solid mass (II), comprising the steps of: causing an ultrasonic wave to impinge

onto said contacting surfaces; detecting an acoustic pressure of a reflection wave of said ultrasonic wave coming from said contacting surfaces and detecting an acoustic pressure of a transmission wave of said ultrasonic wave transmitting through said contacting surfaces, by measuring the contact stress using the ratio of the acoustic pressure of the reflection wave to the acoustic pressure of the transmission wave as the index of evaluation by using the rectilinear correlation in logarithm between the contact stress $\sigma$ and the difference $\Delta h$ in the heights of the acoustic pressures of the reflection wave and the transmission wave expressed by the formula $\Delta h = a \log \sigma + b$,wherein a and b are:

$$a = \frac{n\Sigma\sigma\cdot\Delta h - \Sigma\sigma\cdot\Sigma\Delta h}{n\Sigma\sigma^2 - (\Sigma\sigma)^2}, \text{ and}$$

$$b = \frac{\Sigma\Delta h\Sigma\sigma^2 - \Sigma\sigma\cdot\Sigma\sigma\Delta h}{n\Sigma\sigma^2 - (\Sigma\sigma)^2}$$

wherein:
n represents the number of samplings taken in the experiment.

An advantageous embodiment of this method is characterized by the step of detecting an acoustic pressure of a second reflection wave of said ultrasonic wave as this latter wave, after having transmitted through said contacting surface , is reflected at the bottom surface of the second solid mass not located on that side to which the ultrasonic wave is caused to impinge and further is transmitted through said contacting surfaces again and is emitted to the exposed surface of the first solid mass located on that side to which the ultrasonic wave is caused impinge; and measuring the contact stress using the ratio of the acoustic pressure of the first reflection wave to the acoustic pressure of the second reflection wave as the index of evaluation by using the rectilinear correlation in logarithm hereinbefore.

By the method according to the invention it becomes possible to quantitatively evaluate the contact stress with a high accuracy as compared with the conventional technique which uses B/A as an index for evaluation.

The method of making a comparison between the acoustic pressure of the reflecting wave coming from said contacting surfaces and the acoustic pressure of the transmitting wave which has transmitted through said contacting surfaces may be roughly divided into the following two types. The first one (illustrated in Fig. 4) of these two types uses an ultrasonic wave oscillating sensor and a sensor for receiving the reflecting wave coming from the contacting surfaces both of which are provided on the exposed surface of one of the abutting two solid masses, and also uses a sensor provided on the bottom side of the other one of the solid masses for receiving the transmitting wave, and the signals obtained from said reflecting wave receiving sensor and said transmitting wave receiving sensor are compared with each other. The second type method (illustrated in Fig 6)-provides,on the exposed surface of only one of the abutting two solid masses, an ultrasonic wave oscillating sensor, another sensor for receiving the reflecting wave coming from the contacting surfaces and still another sensor for receiving the reflecting wave coming from the bottom surface of the other one of the solid masses, so that there are obtained a reflecting wave signal (hereinafter to be referred to as a first reflection wave) from the contacting surfaces, and a transmission-reflection wave (hereinafter to be referred to as a second reflection wave which represents the ultrasonic wave having transmitted through the contacting surfaces and reflecting at the bottom surface of the other one of the solid masses), and these two signals are compared with each other.

As discussed above, the first type method is capable of making a quantitative evaluation of the contact stress by increasing the degree of change of the detection value in compliance with the variation of contact stress. However, the second reflection wave in the second type method, in fact, is the acoustic pressure of the wave which has passed through the contacting surfaces twice. Accordingly, this second type method makes it possible to further increase the degree of change in the detection value than in the case of the first type method, and to thereby be able to make a quantitative evaluation with a still higher accuracy.

The abovesaid first type method and second type method may be divided further as follows. That is, there are the method for bringing the incidence of ultrasonic wave in a direction normal to the contacting surfaces (shown in Fig.12), and the method for directing the incident ultrasonic wave so as to impinge obliquely to the contacting surfaces (shown in Fig. 13 and 14).

Also, the most preferred method according to the present invention is a combination of said second type method and the method of making normal-to-surface incidence of ultrasonic wave. The reason therefor is as follows. In case the incidence of an ultrasonic wave is effected in a direction normal to the contacting surfaces, the first reflection wave coming from the contacting surfaces and the second reflection wave which is produced in such way that the incident ultrasonic wave which transmits through the contacting surfaces is reflected at the bottom of the solid mass both will emit out of the solid masses at a same single

position. Therefore, the ultrasonic wave oscillating sensor, another sensor for detecting the first reflection wave coming from the contacting surfaces and the other sensor for detecting the second reflection wave all can be served concurrently by a single sensor. Thus, the amount of the variation of the detection signals due to the difference in the manner of applying the sensors, and the difference in the state at the positions at which the sensors are applied are cancelled out, and it becomes possible to detect an accurate signal provided by the true contact stress.

## Brief description of the drawings

Fig. 1 is a schematic illustration, on a micrographically enlarged scale, showing the state of contact at the contacting surfaces of two metal masses.

Fig. 2 is a diagrammatic explanatory illustration showing the conventional method of measuring the contacting surfaces by using an ultrasonic wave sensor.

Fig. 3 is a chart showing the relationship between the contact stress and the intensity of the reflecting wave of an ultrasonic wave, obtained by the conventional method shown in Fig. 2.

Fig. 4 is an explanatory illustration of a first type or basic principle of the measuring method according to the present invention.

Fig. 5 is a diagrammatic sectional view showing the state of a bushing which is forced into the bore of a boss.

Fig. 6 is a brief explanatory illustration showing a second type of measuring method according to the present invention.

Fig. 7 is an explanatory illustration showing the echo pattern displayed on a CRT, obtained according to the method shown in Fig. 6.

Figs. 8 and 9 are explanatory illustrations showing an example of the method of comparison between a reflection wave and a transmission wave (first type).

Fig. 10 is a chart showing an example of the relationship between the contact stress obtained by the method shown in Fig. 6 and the comparative value of the echo heights(second type).

Fig. 11 is a chart showing the relationship between the contact stress and the comparative value of echo height when the inner diameter of the boss of Fig. 5 is varied.

Figs. 12 to 14 are diagrammatic brief explanatory illustrations similar to Fig. 4 and 6 showing each another example of the measuring method of the present invention.

Fig. 15 is an explanatory illustration showing the echo pattern displayed on a CRT, obtained by the method shown in Figs. 12 and 14.

Fig. 16 is a chart showing the relationship between the contact stress obtained by the method shown in Fig. 12 and the comparative value of the echo height.

Fig. 17 is a chart showing the relationship between the contact stress obtained by the method shown in Fig. 13 and the comparative value of the echo height.

Fig. 18 is a chart showing an example of the relationship between the contact stress obtained by the method shown in Fig. 14 and the comparative value of the echo height.

Figs. 19 and 20 are illustrations showing an example in which the present invention is applied to the measurement of the contact stress at the bolt-fastened surfaces, in which:

Fig. 19 is a brief explanatory illustration of the state of bolt-fastening and the measurement method, and

Fig. 20 is a chart showing the distribution of contact stress indicating the result of the measurement.

Fig. 21 is a diagrammatic vertical sectional view showing the method of continuous measurement of an objective via a liquid.

Fig. 22 is a sectional view taken along the line X-X in Fig. 21.

Figs. 23 and 24 are diagrammatic illustrations showing another method of making continuous measurement of an objective via a liquid, in which:

Fig. 23 is a vertical sectional view thereof, and

Fig. 24 is a sectional view taken along the line Y-Y in Fig. 23.

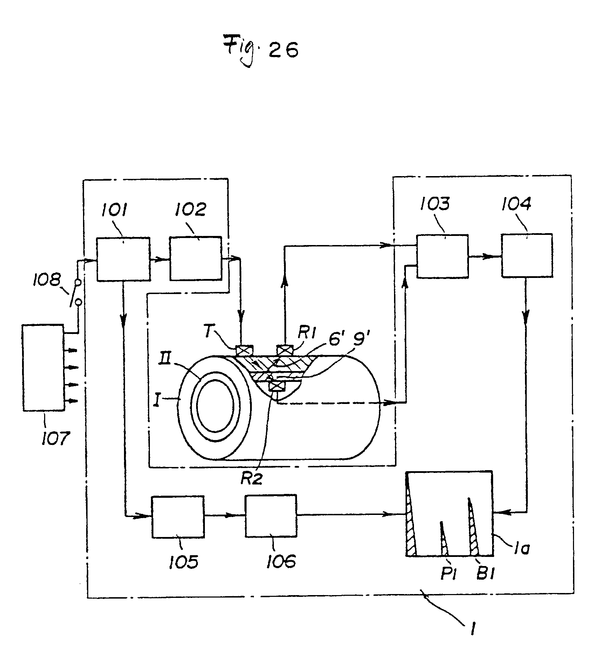

Figs. 25 and 26 are block diagrams showing the examples in which the present invention is carried out by using an ultrasonic flaw detector, in which:

Fig. 25 shows the instance of Fig. 6, and

Fig. 26 shows the instance of Fig. 14.

According to one aspect of the invention the reflection ultrasonic wave reflected at the contacting surfaces is compared with the transmitting ultrasonic wave which has transmitted through said contacting surfaces, to thereby measure the aimed contact stress.

As a concrete example, there are used an ultrasonic flaw detector of pulse echo type 1 which is being used widely as a testing apparatus of abutting metal masses by utilizing an ultrasonic wave, and its Probe 2 (hereinafter to be referred to as an ultrasonic wave sensor). The ultrasonic wave sensor 2 is applied to the outer surface of a metal mass I to emit an ultrasonic wave 3 penetrating into the metal mass I. It should be understood here that the ultrasonic wave sensor used in this embodiment is a longitudinal wave sensor, so that the ultrasonic wave 3 is caused to emit in a direction

which is substantially normal to the contacting surfaces.

The ultrasonic wave 3 transmits through the metal mass I. When the ultrasonic wave 3 reaches the contacting surfaces 4 of the metal masses I and II, a part of the ultrasonic wave 3 is reflected at the contacting surfaces 4, and this reflection wave (hereinafter to be referred to a first reflection wave) 6 comes back to the ultrasonic wave sensor 2. Also, another part of the ultrasonic wave 3 transmits through the contacting surfaces 4 and enters into the metal mass II. The ultrasonic wave which has entered into this metal mass II transmits through this metal mass II. When this ultrasonic wave arrives at the bottom surface of this metal mass II, it is reflected almost 100% thereat. This reflected ultrasonic wave again transmits through the metal mass II. When this reflection wave arrives at the contacting surfaces 4 of the metal masses II and I, a part of this reflected ultrasonic wave is reflected at the contacting surfaces 4, whereas the other part thereof transmits therethrough. And, the ultrasonic wave which has transmitted through the contacting surfaces 4 and entered into the metal mass I transmits through the metal mass I, and comes back to the ultrasonic wave sensor 2 as a post-transmission reflection wave (hereinafter to be referred to as a second reflection wave) 7.

An A-scope which is comprised of an ordinate axis representing the signal reception input supplied from the sensor and an abscissa axis which crosses the ordinate axis at right angle and representing the transmission time of the ultrasonic wave is displayed on the Braun tube of the ultrasonic flaw detector 1, for observation.

The pattern of the $B_1$ echo of the first reflection wave 6 coming from the contacting surfaces and the pattern of the $P_1$ echo of the second reflection wave are as shown in Fig 7. It will be noted that $B_1$ echo appears at a position which comes after the lapse of a time $T_1$ corresponding to the thickness $t_1$ of the metal mass I, while $P_1$ echo appears at a position which comes after the lapse of a time $T_2$ with a delay from the appearance of $B_1$ echo corresponding to the thickness $t_2$ of the metal mass II.

The contacting surfaces of the metal masses I and II are microscopically enlarged and shown schematically in Fig. 1, in which the contacting surfaces are comprised of a true contact portion C and a contact portion N of air and metal mass. Therefore, in case the contact stress is small and there is an abundancy of the contact portion N of air and metal mass, the application of an ultrasonic wave will produce an effect that the height

$$h_{B_1}$$

of the $B_1$ echo will become greater, whereas in case the contact stress increases and amount of the true contact portion C increases, there will be produced an effect that the height

$$h_{P_1}$$

of the $P_1$ echo will become greater. However, the degree of wuch proportional effects is subject to a change due to a great harshness of the surface roughness of the contacting surfaces, and it should be noted that a result of measurement with a better accuracy can be obtained from a surface roughness of a smaller degree. In case the surface roughness is very large, it should be noted that even when the plastic deformation of the protrusions present at the opposing contacting surfaces advances, these surface protrusions are not collapsed sufficiently and easily owing to such reasons that the height or pitch of these surface protrusions are great, and as compared with the proportion of an increase in the contact stress, the amount of the contact portion intervence by air will remain in a large amount, so that there is an instance wherein no accurate result of measurement can be obtained. From such finding, it can be said that, in case of, for example, a metal mass, the desirable lower limit of surface roughness is about 50$\mu$m. By changing the height of $P_1$ echo to the level of 80% on the CRT to a same level as that of the initial $B_1$ echo height shown in Fig. 9, and when, thus, the graduation pointed by the knob 8 of the amplifier has become B(dB), the comparative value $\Delta h$ will become as shown by the follwoing Formula (5):

$$\Delta h(dB) = A(dB) - B(dB) \quad (5).$$

More specifically, in case the height of echo is indicated by decibel, it becomes possible to very readily obtain the value $\Delta h$ of comparison from the difference in the height of echoes.

In order to obtain the contact stress $\sigma$ directly from the value $\Delta h$ of comparison which has been obtained in a manner as stated above, there is a method such that an empirical formula which will be stated later is programmed in such means as an electronic computer, and the abovesaid $\Delta h$ and the inner diameter $d_2$ of the boss are inputted for computation. Or, there is another method that the empirical formular is computed and a chart is prepared therefrom and a contact stress $\sigma$ is obtained from $\Delta h$ by referring to the chart.

A concrete effect or advantage acocrding to the present invention has been confirmed as a result of the below-mentioned experiments.

In case a longitudinal wave generating sensor using an ultrasonic wave of the frequency of 2.25MHz, and having a vibration member with a diameter of 10mm is employed, the value of the experiment on the relationship between the contact stress produced at the fit surfaces when a bushing II (made of material: STKM-16A, an induction-hardened steel) is forced into a boss I (made of a material: S35C, a heat refined steel, having an inner diameter of 80mm) in a amnner as shown in Fig. 5 nad the comparative value Δh of echo height (this means, in this embodiment, the difference in the echo heights expressed in decibels, and therefore it will be referred to hereinafter as the echo height difference) is as plotted by samll circles in Fig. 10. This relationship between the contact stress $\sigma$ and the echo height difference Δh shows a change which is by far the greater than the variation in the intensity of the reflection wave relative to the increase in the amount of the contact stress $\sigma$ shown in Fig. 3.
Thus, it is noted that there can be made a quantitative measurement with a good accuracy.

Based on the values of experiments conducted as above, a regression formula $\Delta h = a \ell og \sigma + b$ is sought by relying on the least square method, wherein a and b are:

$$a = \frac{n\Sigma\sigma\cdot\Delta h - \Sigma\sigma\cdot\Sigma\Delta h}{n\Sigma\sigma^2 - (\Sigma\sigma)^2}, \text{ and}$$

$$b = \frac{\Sigma\Delta h\Sigma\sigma^2 - \Sigma\sigma\cdot\Sigma\sigma\Delta h}{n\Sigma\sigma^2 - (\Sigma\sigma)^2}$$

wherein:
n represents the number of samplings taken in the experiment, and in this case, n = 12.
a and b are calculated to be: a = -31.0, and b = 8.17. Accordingly, the regression formula will become:

$$\Delta h = -31 \ell og \sigma + 8.17 \quad (6),$$

and their loci will form such rectilinear line as shown in Fig. 10. As such, between the contact stress $\sigma$ and the echo height difference Δh, there will be established a rectilinear correlation in logarithm as shown in Fig. 10. By using this regression line, it is possible to directly and readily know the contact stress $\sigma$ from the echo height difference Δh.

The Regression Formula (3) shown in Fig. 3 represents the result of experiment when the bore diameter $d_2$ of the boss of Fig. 5 is set at 80mm. It should be understood, however, that in case the bore diameter $d_2$ of the boss varies in spite of the material of this boss being the same, the Regression Formula will vary accordingly. Therefore, based on the result of the experiment which is conducted by varying the bore diameter $d_2$ of the boss, respective regression formulas for the respective bore diameters $d_2$ are sought by relying on said least square method, and the result is that, as a general formula of Δh in case of said material, the following Formula (7) is obtained:

$$\Delta h = (49.83 \ell og d_2 - 126.2) \ell og \sigma + 33.55 \ell og d_2 - 55.7 \quad (7).$$

Accordingly, in case the bore diameter $d_2$ of the boss is already known, or in case it is measured, go by using a scale, it becomes possible to measure the contact stress from said formula (7).

## Claims

1. A method of measuring a contact stress at contacting surfaces (4) of a first solid mass (I) and a second solid mass (II), comprising the steps of: causing an ultrasonic wave to impinge onto said contacting surfaces; detecting an acoustic pressure of a reflection wave of said ultrasonic wave coming from said contacting surfaces (4) and detecting an acoustic pressure of a transmission wave of said ultrasonic wave transmitting through said contacting surfaces (4); characterized by measuring the contact stress using the ratio of the acoustic pressure of the reflection wave to the acoustic pressure of the transmission wave as the index of evaluation by using the rectilinear correlation in logarithm between the contact stress $\sigma$ and the difference Δh in the heights of the acoustic pressures of the reflection wave and the transmission wave expressed by the formula $\Delta h = a \log \sigma + b$.
wherein a and b are:

$$a = \frac{n\Sigma\sigma\cdot\Delta h - \Sigma\sigma\cdot\Sigma\Delta h}{n\Sigma\sigma^2 - (\Sigma\sigma)^2}, \text{ and}$$

$$b = \frac{\Sigma\Delta h\Sigma\sigma^2 - \Sigma\sigma\cdot\Sigma\sigma\Delta h}{n\Sigma\sigma^2 - (\Sigma\sigma)^2}$$

wherein:
n represents the number of samplings taken in the experiment.

2. The method of measuring a contact stress at

contacting surfaces of solid masses according to claim 1, characterized by the step of detecting an acoustic pressure of a second reflection wave of said ultrasonic wave as this latter wave, after having transmitted through said contacting surface (4), is reflected at the bottom surface of the second solid mass not located on that side to which the ultrasonic wave is caused to impinge and further is transmitted through said contacting surfaces again and is emitted to the exposed surface of the first solid mass located on that side to which the ultrasonic wave is caused impinge; and measuring the contact stress using the ratio of the acoustic pressure of the first reflection wave to the acoustic pressure of the second reflection wave as the index of evaluation by using the rectilinear correlation in logarithm of claim 1.

## Revendications

1. Procédé de mesure d'une contrainte de contact, à l'endroit de surfaces en contact (4) d'une première masse solide (I) et d'une seconde masse solide (II), comprenant les étapes consistant à amener une onde ultrasonore à venir rencontrer ces surfaces en contact, à détecter une pression acoustique d'une onde de réflexion de l'onde ultrasonore provenant des surfaces en contact (4) et à détecter une pression acoustique d'une onde de transmission de l'onde ultrasonore passant à travers les surfaces en contact (4), caractérisé en ce qu'on mesure la contrainte de contact en utilisant le rapport entre la pression acoustique de l'onde de réflexion et la pression acoustique de l'onde de transmission en tant qu'index de l'évaluation, en utilisant la relation logarithmique linéaire entre la contrainte de contact $\sigma$ et la différence $\Delta h$ entre les hauteurs ou amplitudes des pressions acoustiques de l'onde de réflexion et de l'onde de transmission, différence exprimée par la formule

$$\Delta h = a \log \sigma + b$$

dans laquelle a et b sont définis par :

$$a = \frac{n\Sigma\sigma\cdot\Delta h - \Sigma\sigma\cdot\Sigma\Delta h}{n\Sigma\sigma^2 - (\Sigma\sigma)^2}, \text{ et}$$

$$b = \frac{\Sigma\Delta h\Sigma\sigma^2 - \Sigma\sigma\cdot\Sigma\sigma\Delta h}{n\Sigma\sigma^2 - (\Sigma\sigma)^2}$$

formules dans lesquelles n représente le nombre d'échantillons pris dans l'essai.

2. Procédé de mesure d'une contrainte de contact à l'endroit de surfaces en contact de masses solides suivant la revendication 1 caractérisé en ce qu'il comprend l'étape consistant à détecter une pression acoustique d'une seconde onde de réflexion de l'onde ultrasonore lorsque cette dernière onde, après être passée à travers les surfaces en contact (4), est réfléchie à l'endroit de la surface inférieure de la seconde masse solide qui n'est pas disposée du côté que l'onde ultrasonore est amenée à rencontrer, cette seconde onde de réflexion étant transmise à travers les surfaces en contact et émise vers la surface exposée de la première masse solide qui est située et du côté que l'onde ultrasonore est amenée à rencontrer, l'étape consistant à mesurer la contrainte de contact utilisant le rapport entre la pression acoustique de la première onde de réflexion et la pression acoustique de la seconde onde de réflexion, en tant qu'index d'évaluation, en utilisant la relation logarithmique linéaire de la revendication 1.

## Ansprüche

1. Verfahren zum Messen einer Kontaktspannung an sich berührenden Oberflächen (4) einer ersten festen Masse (I) und einer zweiten festen Masse (II), beinhaltend die Schritte: Auftreffenlassen einer Ultraschallwelle auf die sich berührenden Oberflächen; Erfassen eines Schalldruckes einer Reflexionswelle der Ultraschallwelle, die von den sich berührenden Oberflächen (4) kommt, und Erfassen eines Schalldruckes einer Transmissionswelle der Ultraschallwelle, die durch die sich berührenden Oberflächen (4) durchgeht; gekennzeichnet durch Messen der Kontaktspannung unter Verwendung des Verhältnisses des Schalldruckes der Reflexionswelle zu dem Schalldruck der Transmissionswelle als Bewertungsindex durch Verwenden der geradlinigen Korrelation im Logarithmus zwischen der Kontaktspannung $\sigma$ und der Differenz $\Delta h$ in den Höhen der Schalldrücke der Reflexionswelle und der Transmissionswelle, ausgedrückt durch die Formel $\Delta h = a \log \sigma + b$, wobei a und b sind:

$$a = \frac{n\Sigma\sigma\cdot\Delta h - \Sigma\sigma\cdot\Sigma\Delta h}{n\Sigma\sigma^2 - (\Sigma\sigma)^2}, \text{ und}$$

$$b = \frac{\Sigma\Delta h\Sigma\sigma^2 - \Sigma\sigma\cdot\Sigma\sigma\Delta h}{n\Sigma\sigma^2 - (\Sigma\sigma)^2}$$

wobei:
n die Anzahl der Abtastproben darstellt, die bei dem Versuch genommen werden.

**2.** Verfahren zum Messen einer Kontaktspannung an sich berührenden Oberflächen von festen Massen nach Anspruch 1, gekennzeichnet durch den Schritt des Erfassens eines Schalldruckes einer zweiten Reflexionswelle der Ultraschallwelle, wenn diese letztere Welle, nachdem sie durch die sich berührenden Oberflächen (4) hindurchgegangen ist, an der unteren Oberfläche der zweiten festen Masse reflektiert wird, welche nicht auf der Seite angeordnet ist, auf der man die Ultraschallwelle auftreffen läßt, und weiter durch die sich berührenden Oberflächen erneut hindurchgegangen ist und zu der freiliegenden Oberfläche der ersten festen Masse emittiert wird, die sich auf der Seite befindet, auf der man die Ultraschallwelle auftreffen läßt; und Messen der Kontaktspannung unter Verwendung des Verhältnisses des Schalldruckes der ersten Reflexionswelle zu dem Schalldruck der zweiten Reflexionswelle als Bewertungsindex durch Verwenden der geradlinigen Korrelation im Logarithmus nach Anspruch 1.

Fig. 1

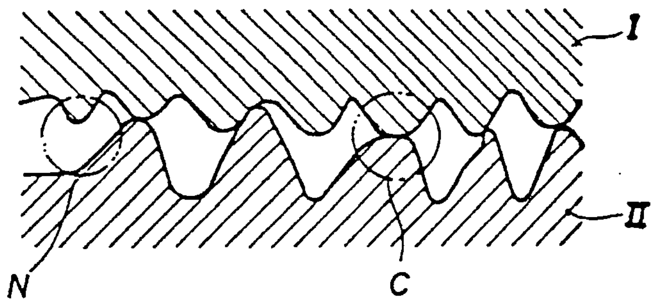


Fig. 2

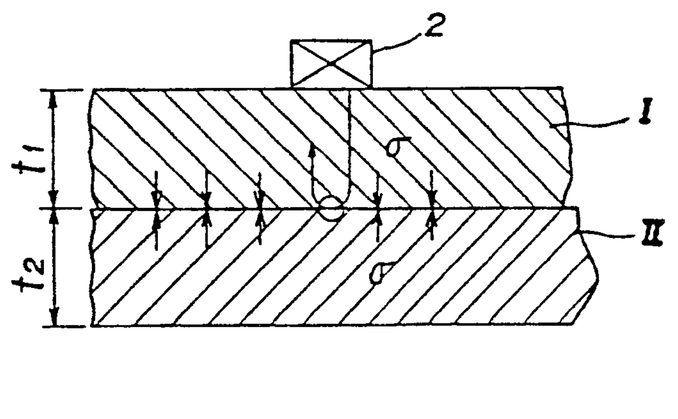

Fig. 3

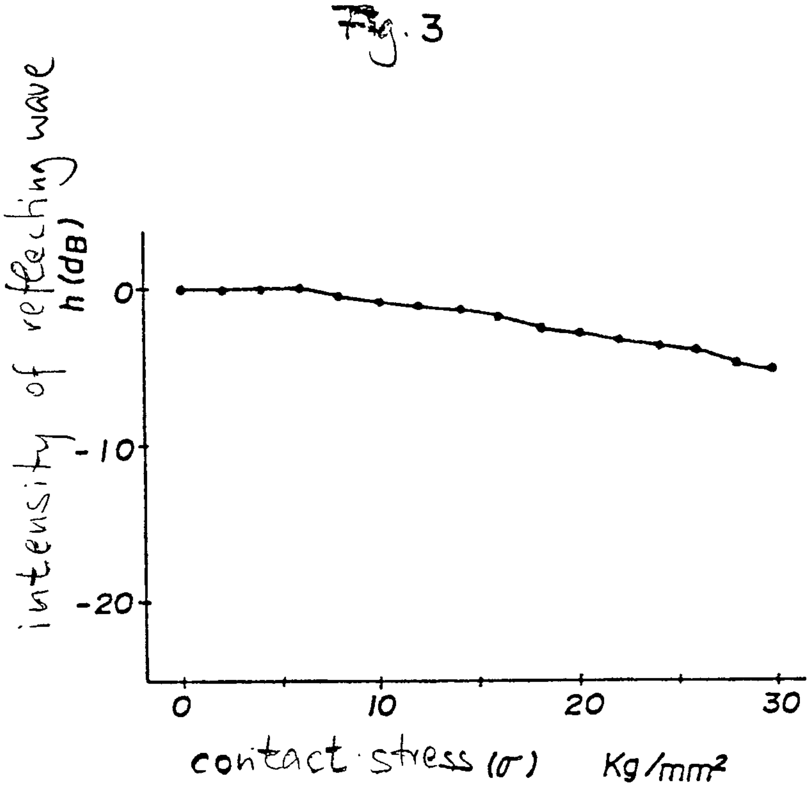
intensity of reflecting wave
h (dB)
0
-10
-20
0
10
20
30
contact stress (σ) Kg/mm²

Fig. 4

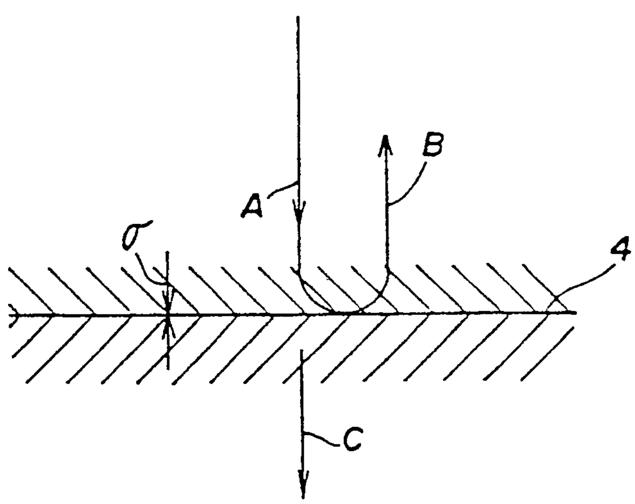
A
B
σ
4
C

Fig. 5

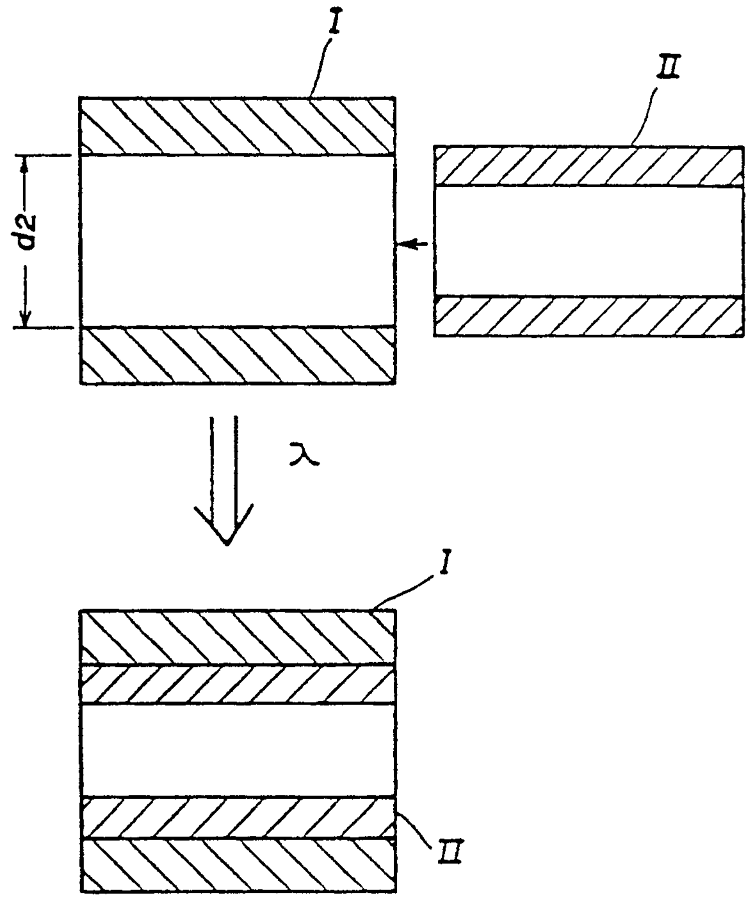

Fig. 6

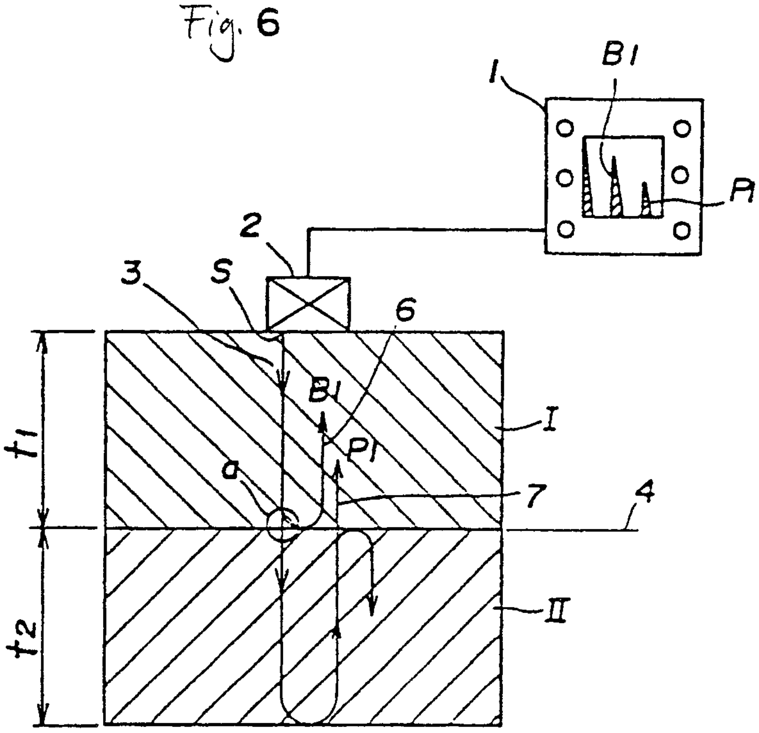


Fig. 7

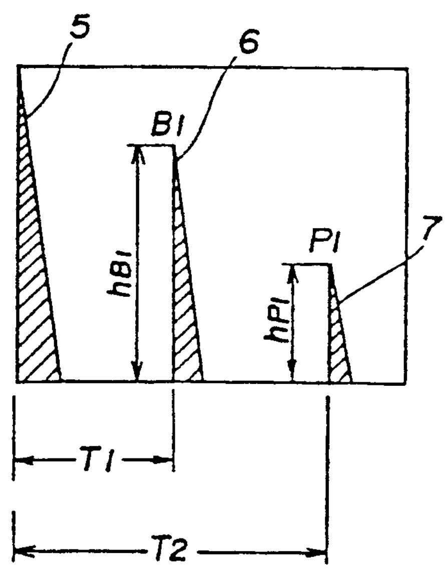

Fig. 8

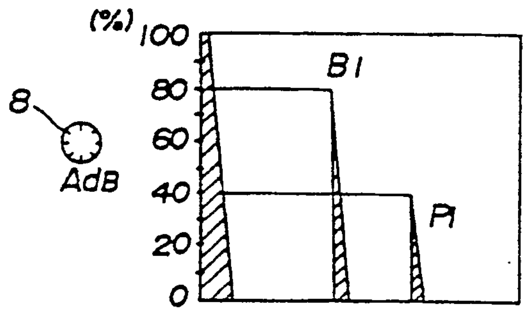


Fig. 9

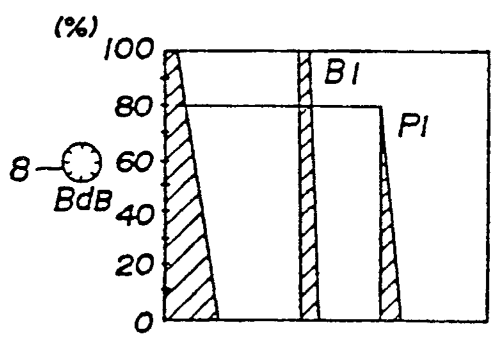

Fig. 10

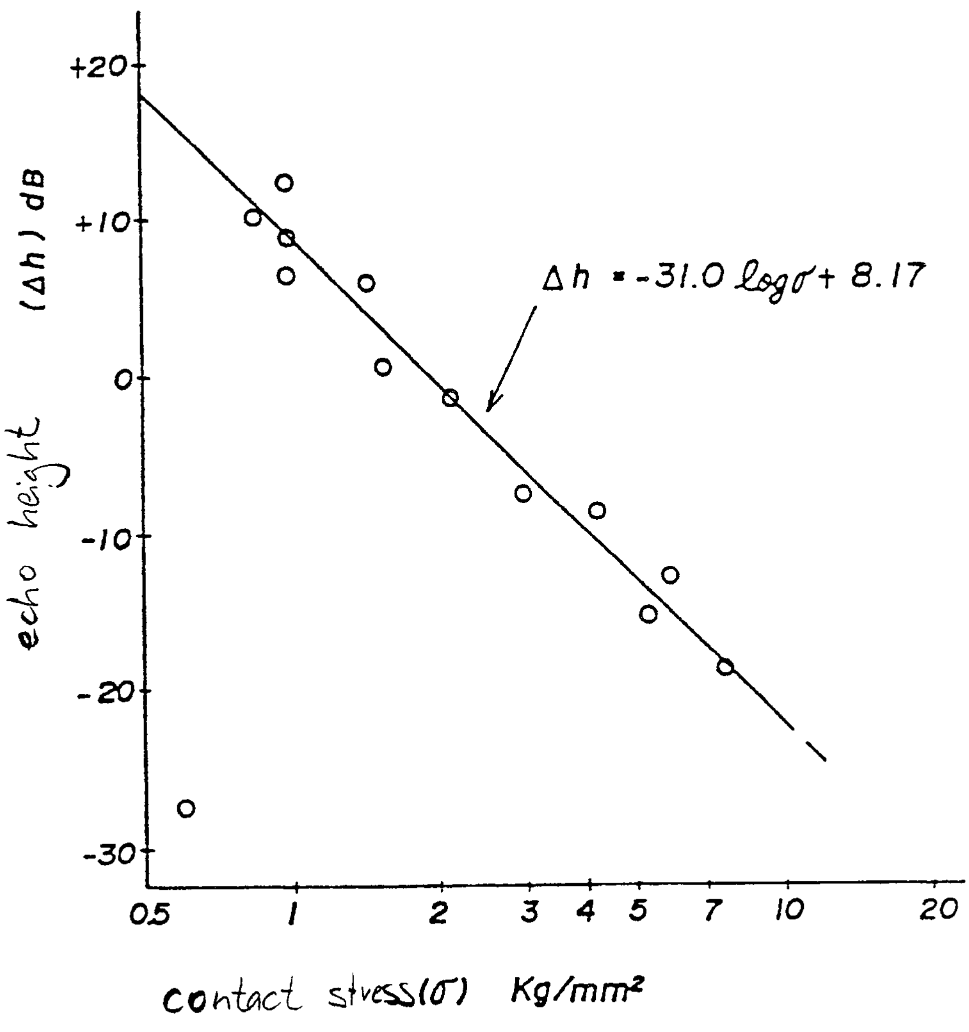
+20
+10
0
-10
-20
-30
echo height (Δh) dB
Δh = -31.0 logσ + 8.17
0.5
1
2
3
4
5
7
10
20
contact stress(σ) Kg/mm²

Fig. 11

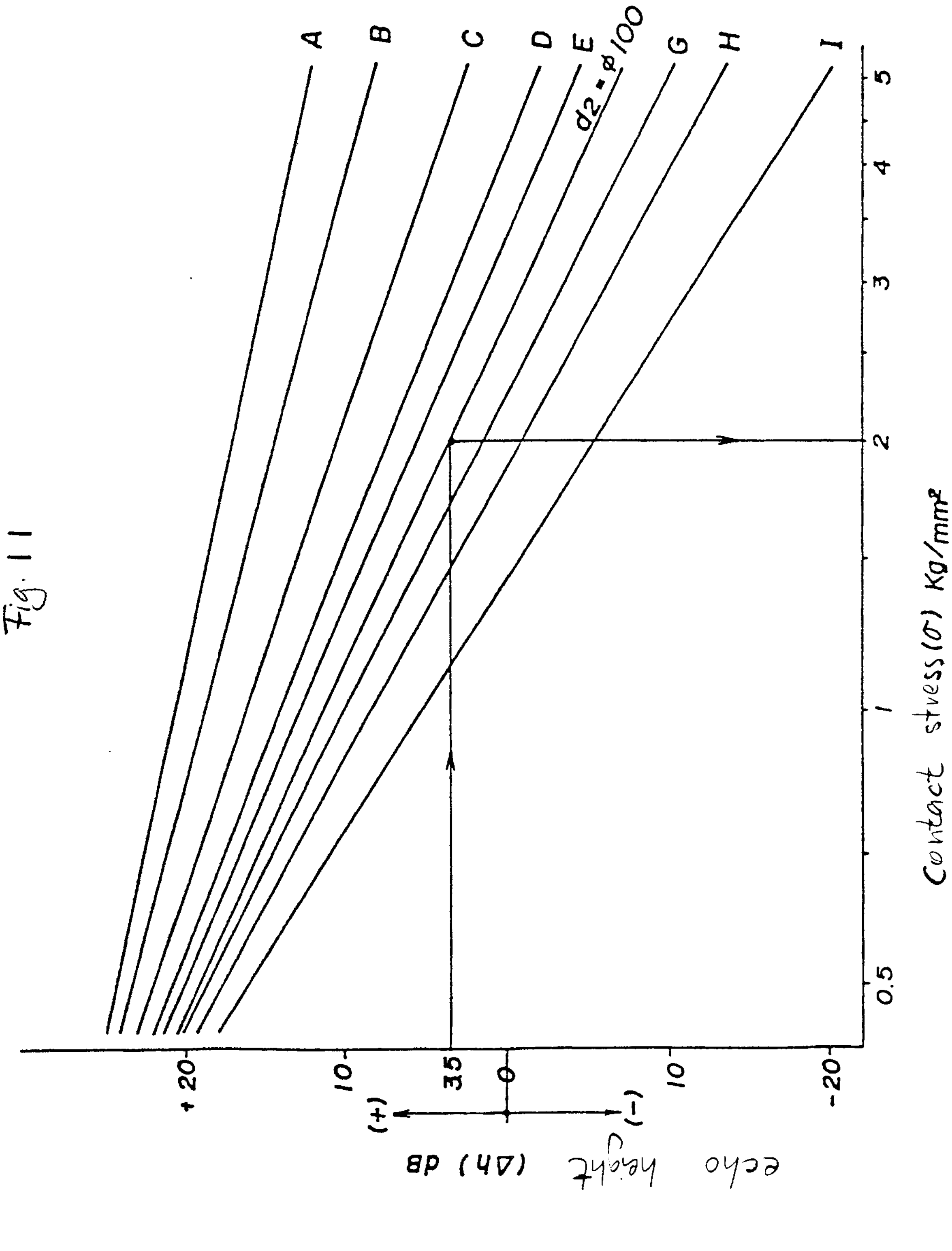
A
B
C
D
E
d2 = φ100
G
H
I
+20
10
3.5
0
10
-20
(+)
(-)
echo height (Δh) dB
0.5
1
2
3
4
5
Contact stress (σ) Kg/mm²

Fig. 12

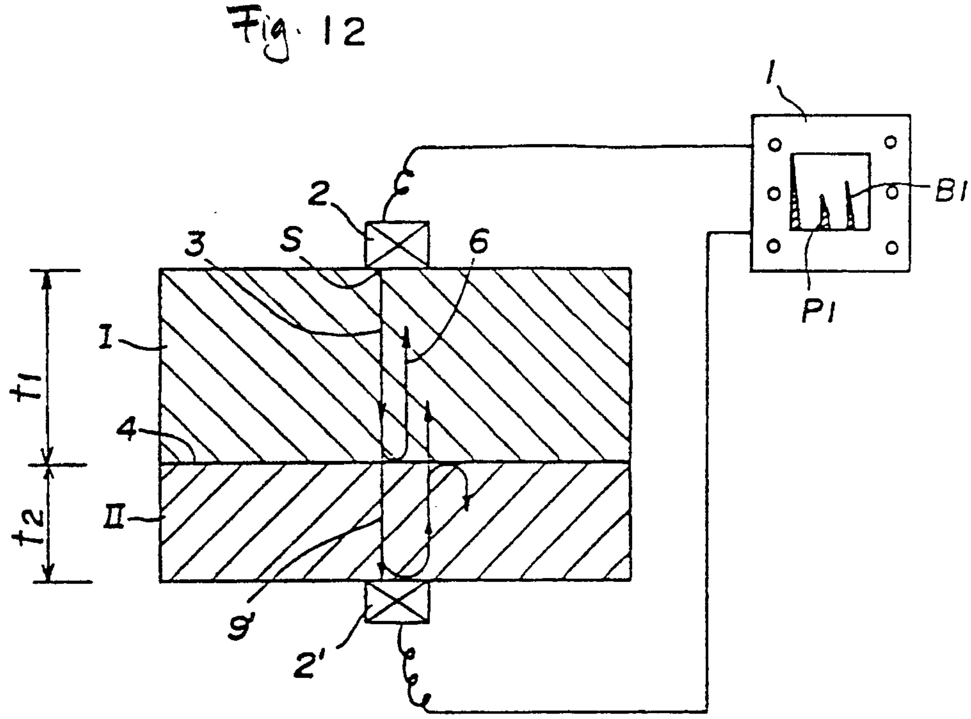


Fig. 13

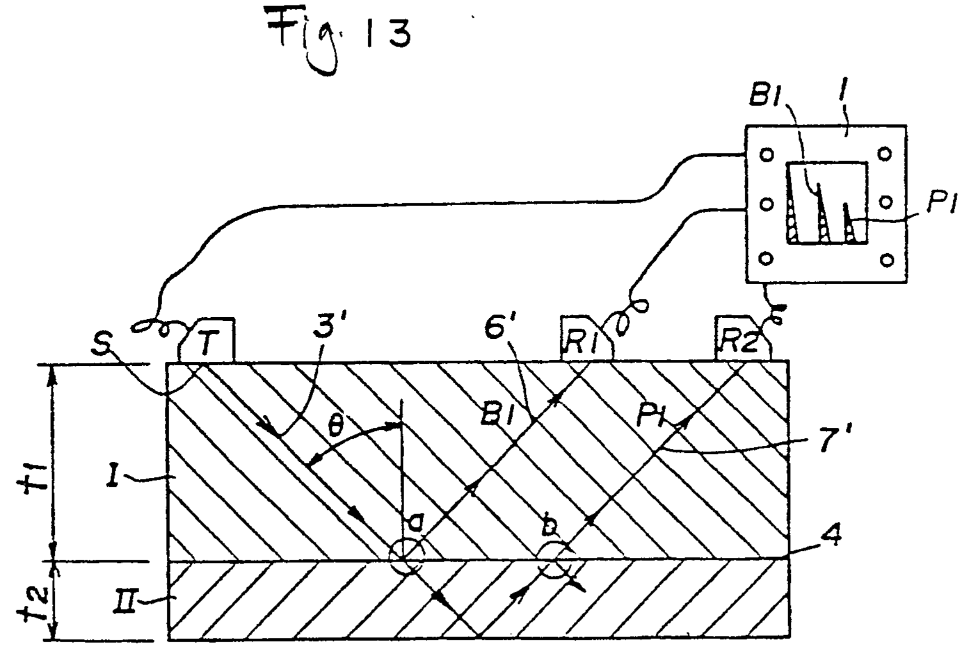

Fig. 14

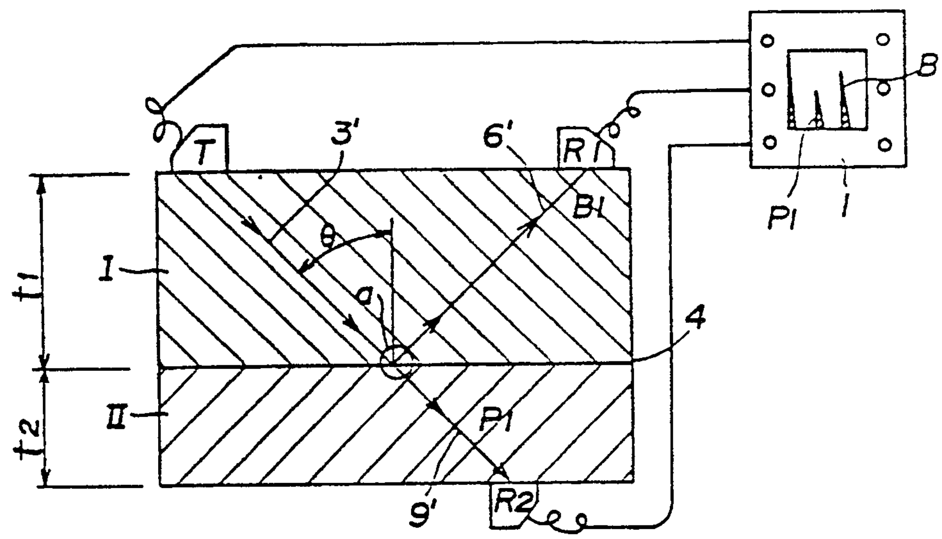


Fig. 15

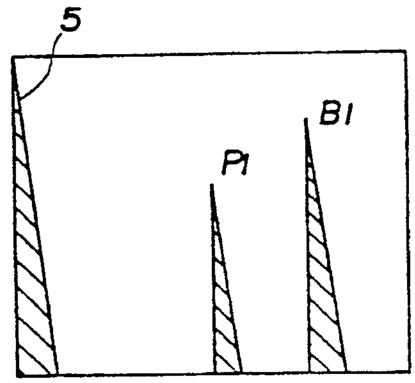

Fig. 16

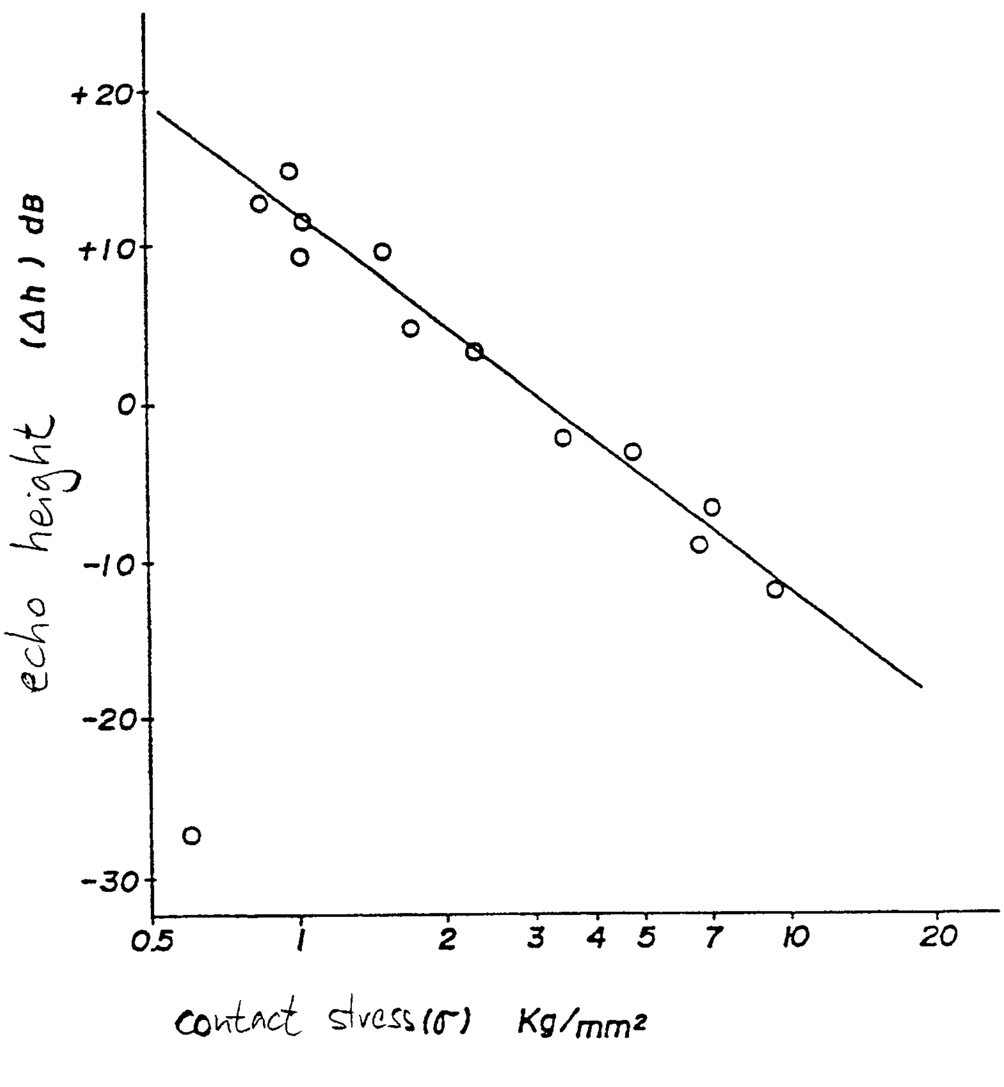
+20
+10
0
-10
-20
-30
echo height (Δh) dB
0.5
1
2
3
4
5
7
10
20
contact stress (σ) Kg/mm²

Fig. 17

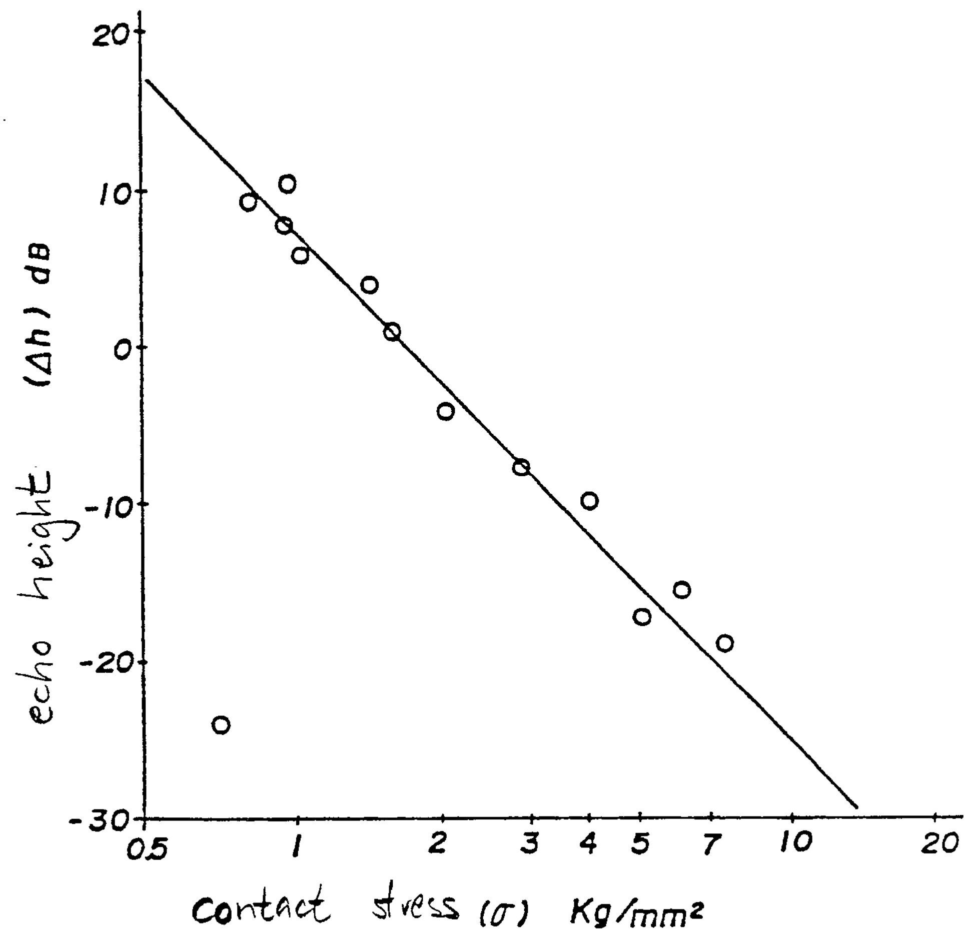
20
10
0
-10
-20
-30
echo height (Δh) dB
0.5
1
2
3
4
5
7
10
20
contact stress (σ) Kg/mm²

Fig. 18

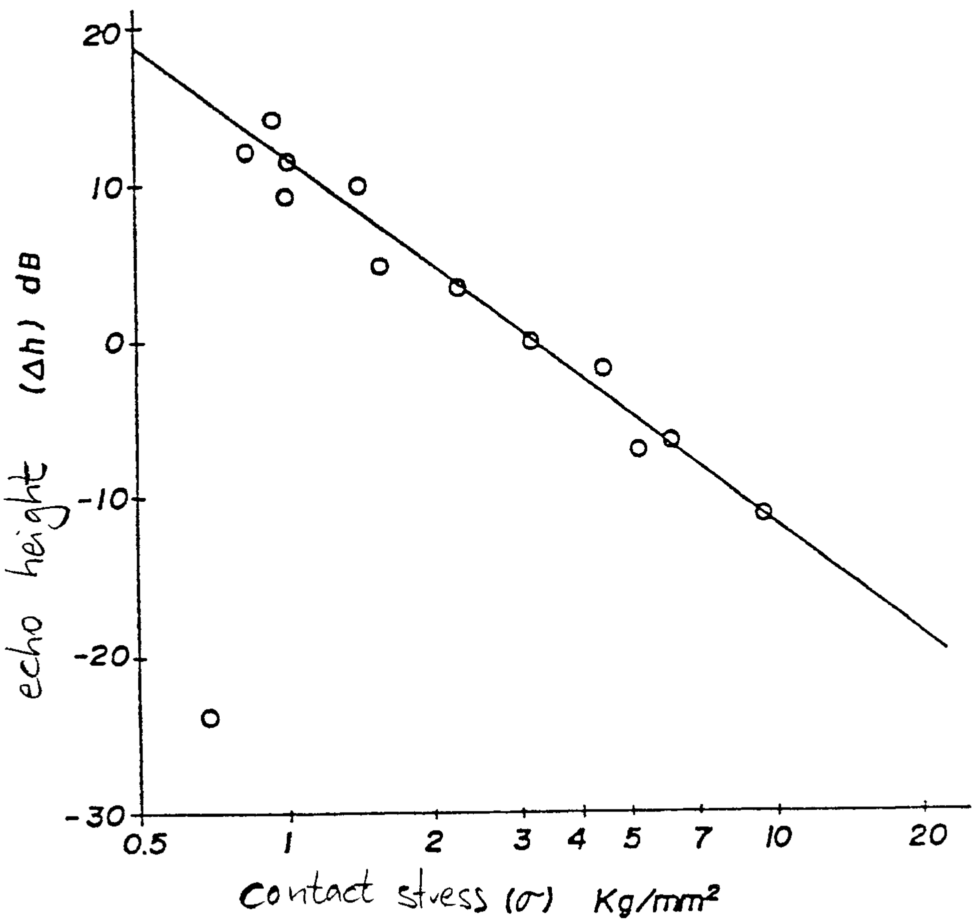
20
10
0
-10
-20
-30
echo height (Δh) dB
0.5
1
2
3
4
5
7
10
20
contact stress (σ) Kg/mm²

Fig. 19

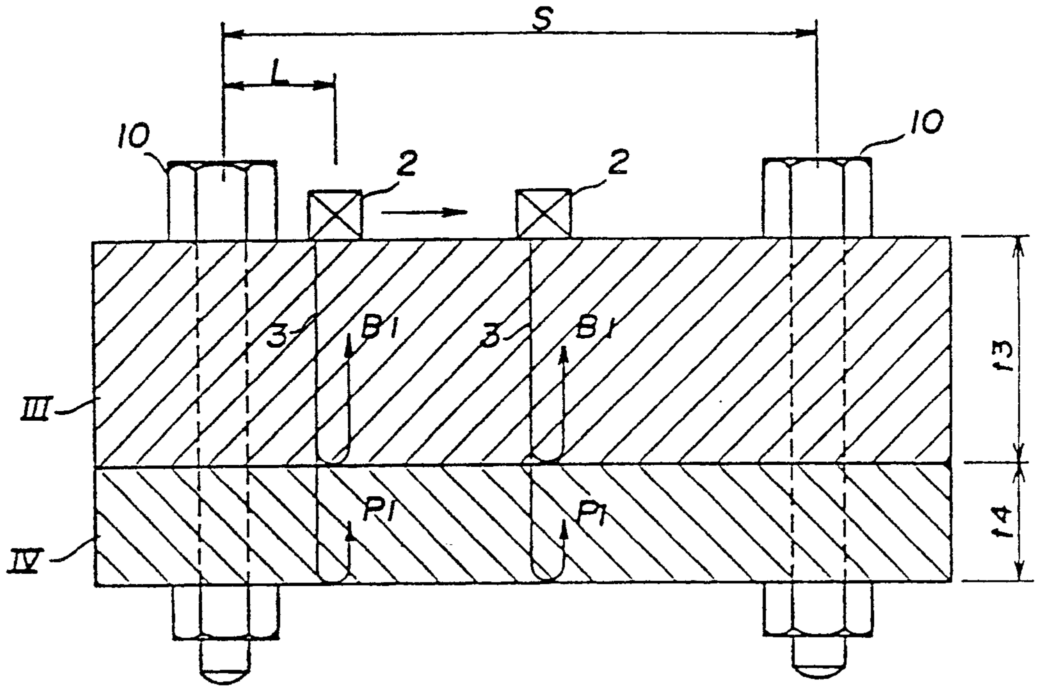
S
L
10
10
2
2
3
B1
3
B1
III
IV
P1
P1
13
14

Fig. 20

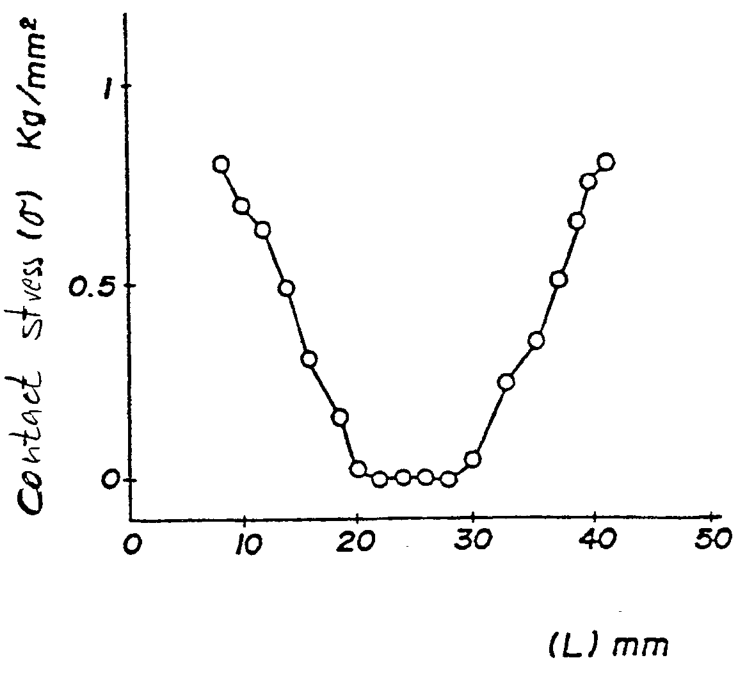
Contact stress (σ) Kg/mm²
1
0.5
0
0
10
20
30
40
50
(L) mm

Fig. 21

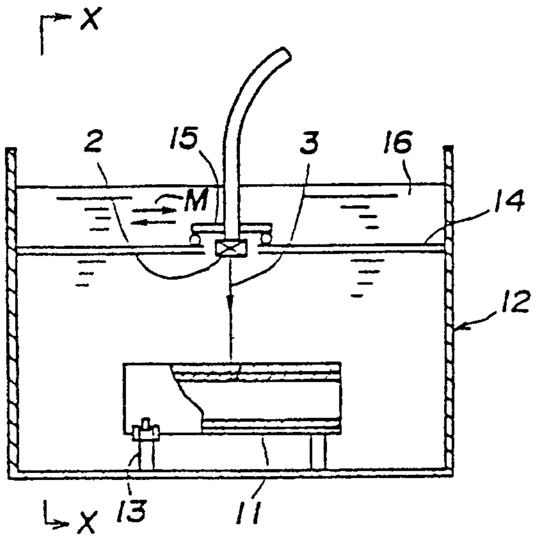


Fig. 22

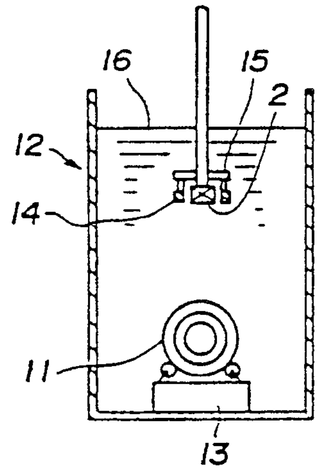


Fig. 23

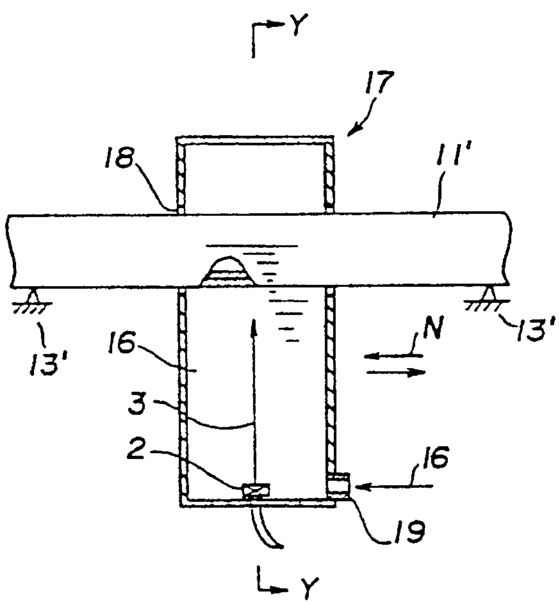


Fig. 24

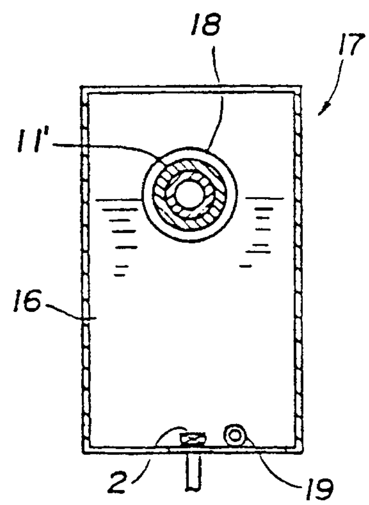

Fig. 25

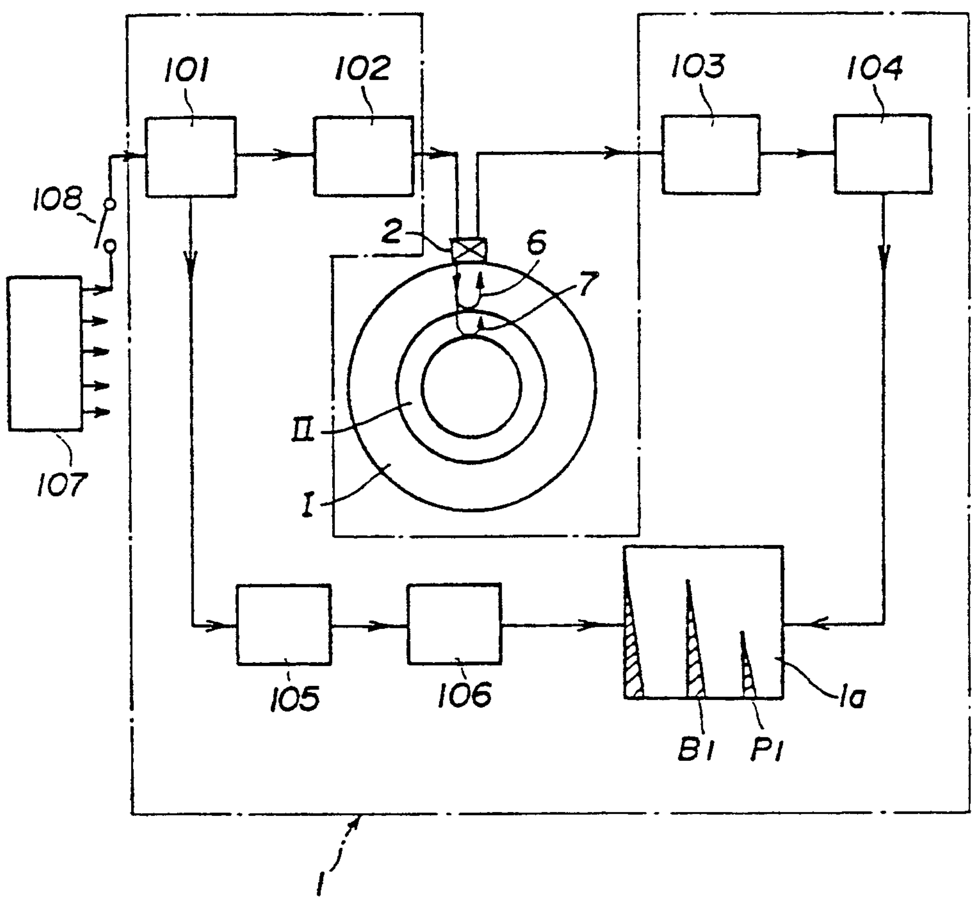

Fig. 26